# EUROPEAN PATENT SPECIFICATION

(11) **EP 1 708 854 B1**
(45) Date of publication and mention of the grant of the patent: **07.04.2010**
(21) Application number: 04801735.4
(22) Date of filing: 08.12.2004
(51) Int. Cl.: B25J 19/00, B23K 9/10, H02J 17/00

(54) **POWER SUPPLY FOR ROBOT APPLICATIONS**
STROMVERSORGUNG FÜR ROBOTERANWENDUNGEN
ALIMENTATION ELECTRIQUE POUR APPLICATIONS ROBOTIQUES

(30) Priority: 10.12.2003 SE 0303378
(43) Date of publication of application: 11.10.2006
(73) Proprietor: ABB AB, 721 83 Västerås (SE)
(72) Inventor: JÖSOK, Ove, S-SE-293 42 Olofström (SE); LUTHARDT, Colin, S-SE-723 49 Västerås (SE); ÖBERG, Pierre, S-SE-723 53 Västerås (SE); KJELLSSON, Jimmy, S-SE-723 44 Västerås (SE); SCHEIBLE, Guntram, DE-694 93 Hirschberg (DE)
(86) International application number: PCT/SE2004/001838
(87) International publication number: WO 2005/056249

(56) References cited:
- WO-A1-2004/112216
- US-A1- 2002 118 004
- US-A1- 2002 118 098

## Description

### TECHNICAL FIELD

The present invention concerns an industrial robot and use of the industrial robot. The invention relates to power supply for robotic and highly automated production applications that include actuators and sensors. The invention is a power supply provided for use in robotic and automation applications.

### BACKGROUND ART

Many different types of tools exist for use in operations carried out by robots. These tools and applications may be mounted on the last axis of the manipulator or robot (eg on the wrist of a robot arm). Ideally, the tool should have an unlimited degree of freedom, e.g. may rotate without limitations. Some tools are simple and require only a compressed air supply, for example. Others may have a more complicated structure and require process media, such as compressed air, cooling media, electric power as well as control signaling between the robot control unit and the tool. Normally all these media, power and control wiring are collected in one process cabling which may be bundled in a flexible tube. This may be arranged on the outside of the robot and on the outside of the robot arm holding the tool. This may alternatively be arranged, at least in part, inside the robot arm. Costly, highly flexible wires are used. However whether arranged outside or inside a robot arm, the fact is that due to complex twisting and repeated bending of the cabling the individual cable parts of the cabling wear out frequently or begin to fail in one way or another. Often the whole cabling has to be replaced.

Another technique for transferring power and/or communications includes the use of electromechanical slip-rings, normally requiring a plurality of slip-rings to supply signals and power with high precision, and expensive precious materials in order to achieve a service lifetimes of perhaps 1-2 years maximum.

An important safety criteria in robotic and highly automated production applications, in automobile manufacturing for example, is a separate power supply line which is provided for actuators. In case of emergency, the separate power supply to actuators is switched off. The goal of this separate power supply is to stop all actuators (which have a safe state without power or bistable behaviour) when an emergency occurs, without also switching off the power supply to sensors and intelligent devices. However, if wireless or contactless supplies are used for power supply then the robot application would require two parallel supply arrangements to realize general and safe actuator power supply, which is made difficult and costly due to the restricted space available, for example, on a robot wrist, as well as restrictions to do with electromagnetic interference.

US2002/118098 discloses a system that wirelessly communicates with a plurality of sensors and actuators mounted on a robotic arm. However power is supplied by cable and no provision is made for an emergency stop.

### SUMMARY OF THE INVENTION

A primary aim of the present invention is to provide a wireless power supply for a tool of an industrial robot that overcomes the drawbacks of known such power supply systems. A secondary aim is to provide a power supply system with an emergency stop operable to isolate a given part only of the industrial robot application.

This object is achieved according to the invention by a power supply system according independent claim 1 and by a method according to independent claim 12. Preferred embodiments are described in the dependent claims.

According to a first aspect of the invention these and more aims are met by the invention in the form of a wireless communication system for automation or robotic automation in which a power supply for the robotic automation device is a wireless or contactless power supply system using e.g. magnetic or electric coupling through the air. To realize the needed parallel safety feature, it additionally contains logic circuits on the sending and receiving unit, by which communications may be carried over the power supply "channel" in a secure way: either by interpreting, preferably using a digital method, a certain blank period as a stop signal or by using an advanced communication pattern to detect the stop situation securely.

On the receiver the side in the ES-Logic, the stop signal may be detected by means of a second rectifier on the high frequency power signal or a small filtering capacitor and a load resistance. The Emergency Stop (ES) may be provided and power interrupted in the first embodiment of the invention without any confirmation check being made, in contrast to a start or re-start signal, when a confirmation check is preferably made before powering on. In a second embodiment, the ES-stop signal is only provided if a confirmation signal has been received from the automation or robot control system via the wireless communication channel which is preferably also the case for switching power back on and first power-up.

In another, further aspect of the invention, the ES-Logic output may be continually monitored by means of the wireless communication channel and checked for consistency by the automation or robot control system.

In a preferred embodiment of the invention the converter comprises a microprocessor unit or a computer. The unit comprises memory means for storing one or more computer programs that control the power transfer. Preferably a such computer program contains instructions for the processor to perform the method as mentioned and described later. In one embodiment the computer program is provided on a computer readable carrier such as a CD ROM. In another embodiment of the invention the program is provided at least in parts over a network such as the Internet. For receiving data or computer program code the computer unit has a communication link with a local area network. This link may comprise a wireless system, a direct contact conduction system or as an overlay on the power supply.

The principal advantage of the invention is that a secure and distinct emergency stop function is provided for a robot or automation application without requiring the provision of two separate power supplies. A further advantage is that by arranging the transmitting part on the industrial robot and the receiving part on the tool the additional weight to the manipulator or robot arm is kept very small or is even less than the weight of a traditional system with cables or involving slip rings. Also the longitudinal erection of the tool interface is kept smaller than traditional solutions.

Another further advantage is that the compact size and low weight of the receiver and power supply components according to the invention reduces the wear and increases the service life for the robot or manipulator arm. The invention thus reduces down time and service time. Yet another advantage is that the compact nature of the preferred embodiment with contactless power supply means that a tool or other robot application may be mounted or changed on the robot more quickly and simply. It is also an advantage that the device according to the invention may be used with any already installed robot, manipulator or similar automation device and as such may be applied to existing installations as well as new installations.

### BRIEF DESCRIPTION OF THE DRAWINGS

Embodiments of the invention will now be described, by way of example only, with particular reference to the accompanying drawings in which:
FIGURE 1 is a schematic or block diagram for an industrial robot equipped with wireless control for an automation or robotic automation robot tool according to an embodiment of the invention;
FIGURE 2 is a schematic diagram of an industrial robot equipped with cabled control for a tool according to the Prior Art;
FIGURE 3 is a schematic for wireless communication and control for an automation or robotic automation robot tool between a robot controller and a robot tool according to an embodiment of the invention;
FIGURE 4 is a schematic diagram showing more detail for the tool shown in FIGURE 3 controlled by wireless communication;
FIGURE 5 is a schematic block diagram of a method for generating and sending an emergency stop signal according to an embodiment of the invention;
FIGURE 6 is a flowchart for a method for detecting a stop signal on the secondary side according to a preferred embodiment of the invention;
FIGURE 7 is a flowchart for a method for detecting an stop signal on the secondary side and releasing an ES stop signal according to an embodiment of the invention;
FIGURE 8 is a flowchart for a method for detecting a stop signal on the secondary side and releasing an ES stop signal on receipt of a confirmation signal according to another embodiment of the invention;
FIGURE 9 is a flowchart for a method for releasing or re-setting an ES stop signal on the secondary side according to an embodiment of the invention;
FIGURE 10 is a flowchart for a method for releasing or re-setting an ES stop signal on receipt of a confirmation signal according to another embodiment of the invention;
FIGURE 11 is a flowchart for a method for detecting a start or re-start signal on the secondary side and releasing a start/re-start signal on receipt of a confirmation signal according to another embodiment of the invention.

### DETAILED DESCRIPTION OF THE EMBODIMENTS

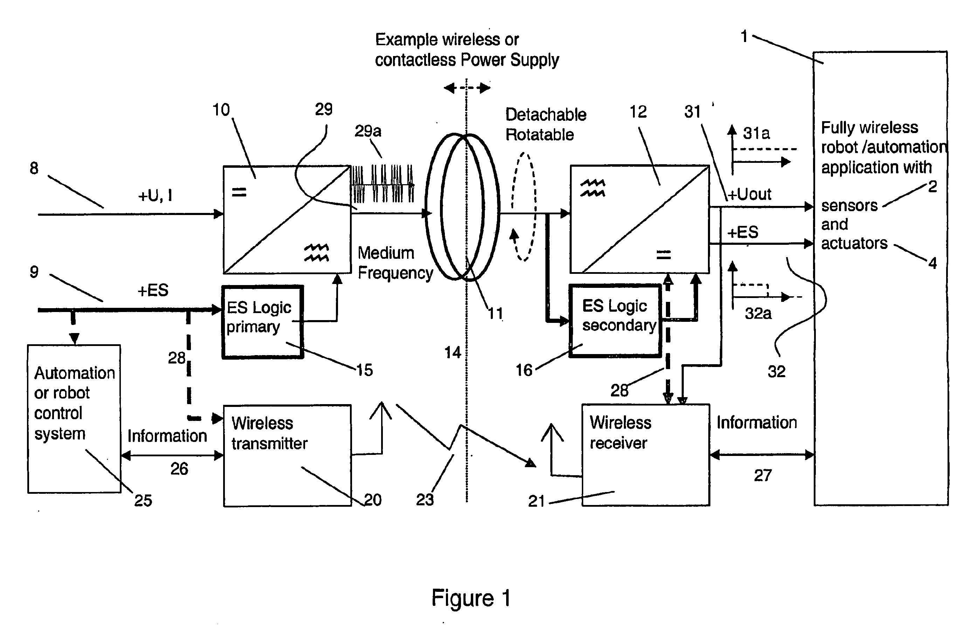

Figure 1 shows a wireless communication system for automation or robotic automation in an embodiment of the invention in which the power supply is a wireless or contactless power supply system using e.g. magnetic or electric coupling through the air. To realize the required parallel safety feature, that is of a power supply to actuators that is separate from the power supply to sensors and/or intelligent devices on the tool or other robot application, the power supply is arranged with logic circuits on the sending unit and receiving unit, by which it can communicate over the power supply "channel" in a secure way.

The power supply system 10 according to Figure 1 comprises a primary part 10 and a secondary part 12. The primary part is attached to the industrial robot or other automation arrangement and the secondary part is attached to the tool. Figure 1 shows an example of a tool or other robot application 1 that comprises one or more sensors 2 and actuators 4 (not shown in detail in Fig 1). A contactless power supply 10 is shown on the left, primary, side of the diagram, which is supplied with DC current 8. Power supply 10 is inductively coupled 11 with a receiving power supply 12 on the right side of the diagram, the secondary or tool side. A dotted line 14 is included to indicate schematically that, in this case, the tool or application 1 on the right side is detachable from the left side and fully rotatable. Each power supply 10, 12 comprises an emergency stop (ES) logic function 15, 16 respectively. ES logic function communications 9 are processed in the sending ES logic function 15 and overlaid in sending power supply 10 on a variable magnetic or electric field that induces a variable current in receiving power supply 16 on the tool side. As is symbolically represented in Fig 1, a variable signal 29a that may be a high frequency signal is imposed, overlaid or modulated in some way on the power output from 10, so that the power 29 received at the secondary side, at the tool side, has a signal embodied in the received electrical power.

Figure 1 also shows a wireless communication unit 20 arranged connected to a robot or automation control system 25, and the sending ES logic function 15. A corresponding wireless communication unit 21 arranged on the tool side connected to the ES logic function 16 at the receiving side. The diagram further illustrates that on the receiving side, a voltage Uout 31 is supplied to the robot application 1, and another voltage with emergency stop capability +ES 32 is supplied to actuators 4 comprised in the robot application 1. Voltage Uout 31 is supplied to robot application 1 components such as sensors 2 and intelligent devices (not shown). A control system 25, which may be a local robot control unit or a central control system, sends and receives control information 26 via the wireless communication unit 20 and a wireless link 23 to and from wireless communication unit 21 arranged on and connected to the tool side. Information from actuators 4, sensors 2, intelligent devices (not shown) of the robot application 1 is made available to wireless communication unit 21 for transmission to the robot control system 25.

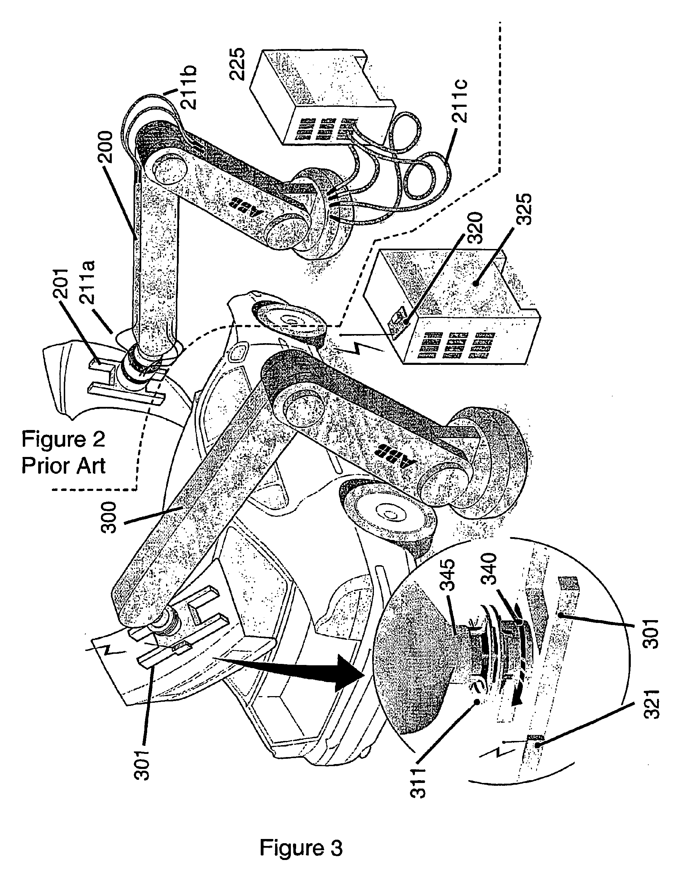

Figure 2 shows an industrial robot 200 with a tool 201 controlled according to the Prior Art. Robot 200 is under control of a robot controller 225. Control cabling 211a for the robot tool 210 is shown arranged between tool 201 and the wrist or arm of the robot. Other control cables 211b, 211c also necessary under the prior art are shown. The robot is shown here fitting a part, a hood in this case, to an automobile.

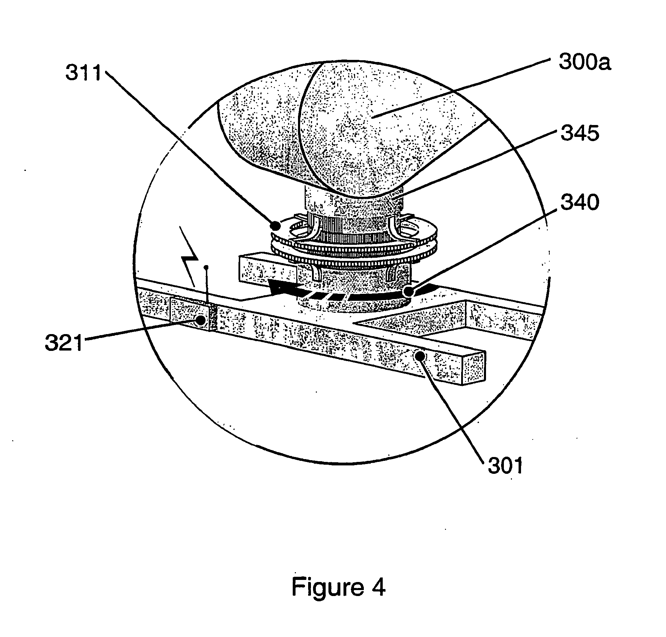

Figure 3 shows an industrial robot 300 with a tool 301 according to an embodiment of the invention under control of a robot controller 325. Robot controller 325 is arranged with a wireless transmitter/receiver 320. In the expanded detail of Figure 3 it is shown that tool 301 has a wireless receiver/transmitter 321 arranged on it. Also shown in more detail in Figure 3 (and again in Figure 4) are two inductive power supply rings 311, one mounted on the robot arm/wrist 345 and the other mounted on the tool 301. The tool 301 is free to rotate clockwise or anticlockwise in a rotation plane as indicated by arrow 340.

Figure 4 is a close up of the tool arrangement, from which it may be understood that tool 301 is fully rotatable on the end of robot arm or wrist 345 in the direction of arrow 340 without interference from any control cabling. In this case, as the power supply is contactless as well, there are no electrical power supply cables to be threaded and routed out to the tool. This also means that changing the tool 301 is greatly simplified, with no cables to be plugged/unplugged or get in the way, simplifying in turn the automation of tool changes.

Returning to FIGURE 1. The invention is operated so as to provide an emergency stop function to one or more actuators 4 in the robot application or tool. A method according to the invention to carry out an emergency stop begins with:
- monitoring 61, 71, 81 the power supply at power supply 12,
- determining by means of logic function 16 a stop signal is comprised in the power signal,
- optionally an additional check 83 may be made for receipt of a stop confirmation communication from the robot control system 25,
- releasing 67, 75, 85 an emergency stop signal at 16 if a stop signal (optionally and a confirmation of stop signal) have been received,
- interrupting power supply 32 to actuators 4.
Thus power to actuators 4 is interrupted but power to sensors 2 and intelligent devices (not shown) is maintained.

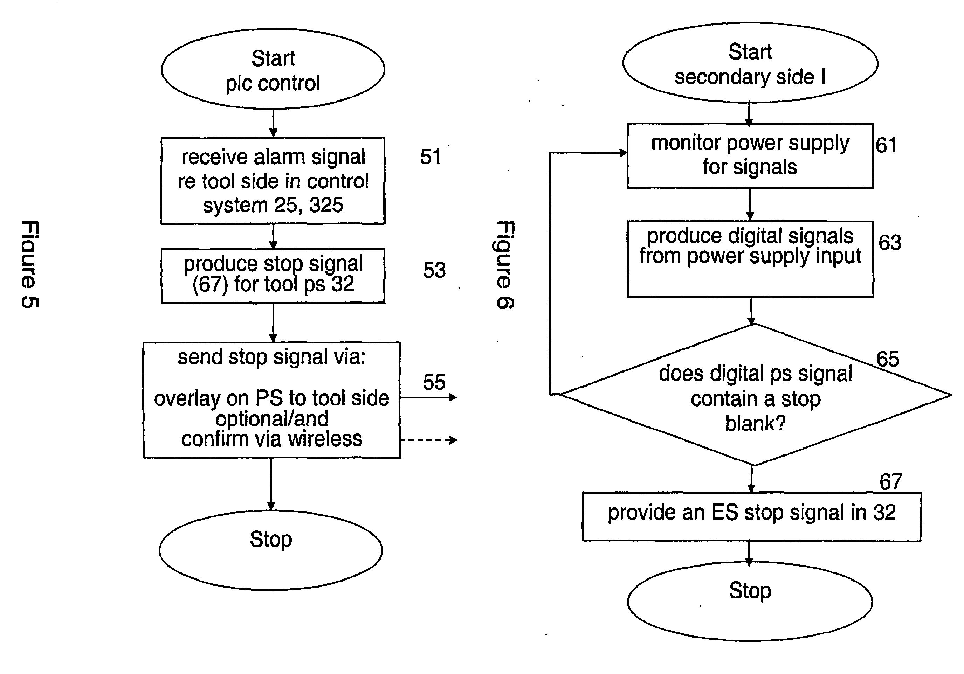

Figure 5 shows the above method according to the invention in the form of a schematic block diagram. On receipt 51 of an alarm signal that is relevant to the tool side in the control system 25, 325, a stop signal is produced 53 and sent 55 to the tool side by means of an overlay (29a Fig 1) on the power supply. Optionally, a separate confirmation of the stop signal may be sent to the tool side via the wireless communication (23, Fig 1).

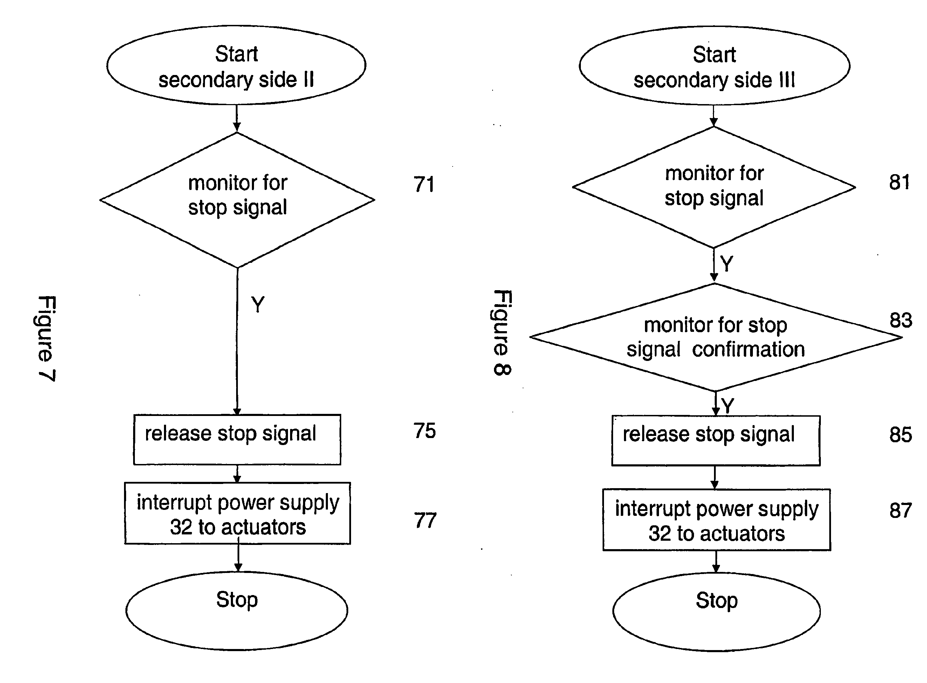

Figure 7 shows a flowchart for providing an emergency stop. On the tool (secondary) side the ES logic unit (Fig 1, 16) monitors 61 the power supply for an overlaid stop signal. Signal processing of the power supply provides a signal corresponding to the overlay (Fig 1, 29a). A logical switch or circuit in ES logic 16 determines at 71 if a stop signal has been received. In this embodiment of the invention, an ES stop signal is then provided 75, so that power supply 32 to the actuators 4 is interrupted (Fig 1, 32a).

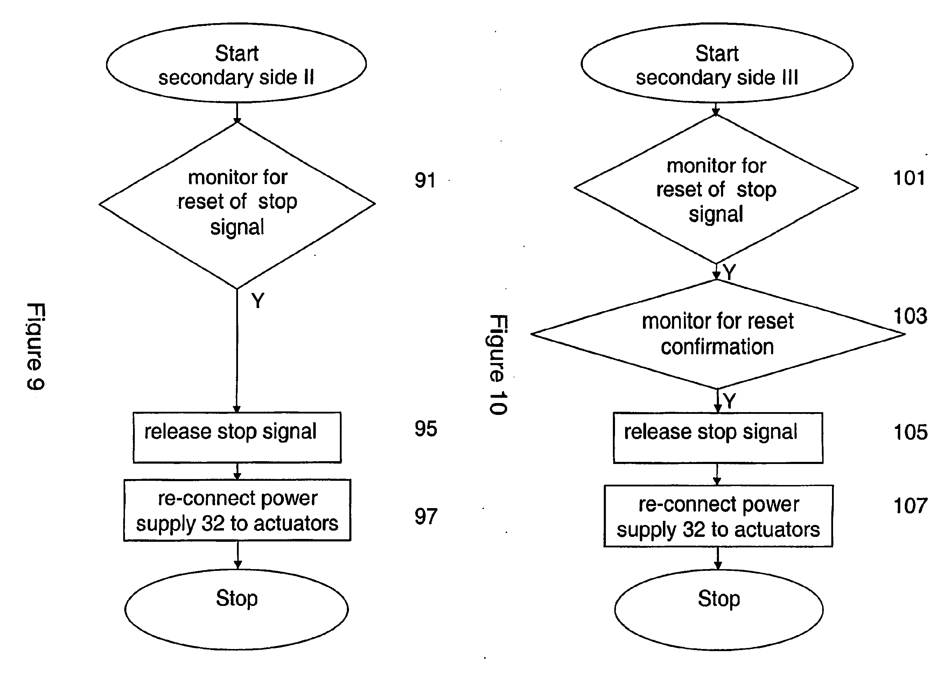

When the power supply to the actuators should be restored, or the stop signal released, a start or re-start is signalled by the control system 25, 325. See FIGURES 9, 10.

A start signal is sent over the power supply from primary side to secondary side and received in secondary power supply 12 and in thus also ES logic member 16. FIGURE 9 shows that a release of the stop signal, that is to say, a start or re-start signal, may be detected 91 on the secondary side and the stop signal released 95 or restart signal given, so that power is restored 97 to the actuators 4 that were disconnected by the ES stop. Similarly FIGURE 10 shows the preferable extra step wherein the ES Logic waits for a confirmation 103 of the restart, or release of the stop signal, before providing a release or re-start 105 so that power is restored or re-connected 107. Preferably, the confirmation signal is also sent by the control system, but by means of the primary 20, 320 and secondary 21, 321 wireless units. Upon receipt of both the start signal and the confirmation, the start signal is released 105 on the secondary side and power 32 thus restored 107 to the actuators 4. This method is essentially the same as that shown by the flowchart of Figure 8, with the exception that it concerns a start signal and not a stop signal.

In another embodiment, Figure 8 shows in a flowchart the additional optional step of waiting for a confirmation of the ES stop signal before releasing the stop signal. Stop signals overlaid on the power supply are monitored for at 81, and if a stop signal is received, the logic waits for a confirmation signal at 83 from the wireless channel. On receipt of both the stop and the confirmation, a stop signal is provided at 85 so that power supply 32 to actuators 4 is interrupted.

Figure 6 shows a method for detecting a stop signal according to a preferred embodiment. The power supply received at the tool side by power supply 16 is continuously monitored at 61. A digital signal representing the power signal is produced 63 by suitable analogue/digital conversion means and examined to see if it contains a predetermined blank period, the blank period being predetermined to represent that an emergency stop is required by the control system 25. If so, Y, the ES function logic in 16 produces an ES stop signal, 65. Thus secondary side power supply (12, Fig 1) interrupts power output 32 to the actuators, symbolised by waveform 32a.

It is the ES stop signal provided 53 on the primary side by the method described in relation to Figure 6 that is the stop signal that is detected on the secondary side in 65, 71, 81 42 of Figures 6-8. The above and other methods of the invention may be carried out by a computer or processor operating under instructions generated by one or more computer programs to carry out said methods, as described in more detail below.

In a further embodiment another or more complex or advanced communication pattern may be generated and passed over the power supply system, which may be detected by comparison, by a statistical method, or by a pattern recognition method.

In another preferred embodiment the receiver side in the ES-Logic is arranged with a second rectifier on the high frequency power signal and a small filtering capacitor and a load resistance to detect the stop-signal.

Other variations of the principles of the invention as disclosed here may be practised. A contactless power supply may be provided based on an electric current induced by a magnetic field, as in the example described, or based on an electrical voltage transmitted capacitively (or other methods) in an electric field. One or both of wireless transmitter 20 and wireless receiver 21 may also for example be wireless transceivers (transmitter-receivers).

Wireless communications may be carried out using any suitable protocol. Short range radio communication is the preferred technology, using a protocol compatible with, standards issued by the Bluetooth Special Interest Group (SIG), any variation of IEEE-802.11, WiFi, Ultra Wide Band (UWB), ZigBee or IEEE-802.15.4, IEEE-802.13 or equivalent or similar. For example a robust broad spectrum wireless protocol in which each of the data packets may be re-sent a number of times at different frequencies, resent for example at 7 times per millisecond, or the like, may be used, such as in a protocol from ABB called Wireless interface for sensors and actuators (Wisa). Wireless communication may also be carried out using Infra Red (IR) means and protocols such as IrDA, IrCOMM or similar. Wireless communication may also be carried out using sound or ultrasound transducers, through the air or via the robot construction, pure magnetic or electric fields (capacitive or inductive communication) or other types of light, such as for example LED, laser, as communication media with standard or proprietary protocols.

The robot and/or automation application 1 may applied to operations such automobile assembly and to manufacturing processes used in automobile manufacturing. The robot or automation application may be used to carry out any of: welding, soldering, electrical soldering, riveting, fettling, painting, spray painting, electrostatic powder spraying, gluing, operations performed in relation to metal processing processes such as continuous casting, casting, diecasting and production methods for other materials such as plastic injection moulding, compression and/or reaction moulding or extrusion. The robot application may carry out other operations, including such as cutting plate, folding plate, bending plate and/or hemming plate. The robot application may comprise a plurality of tools, both specialised tools for welding, painting etc as well as other more general devices, grippers, claws, manipulators and so on that carry out manipulation-type tasks such as holding, placing, pick and place, and even packing of components or subcomponents in a container.

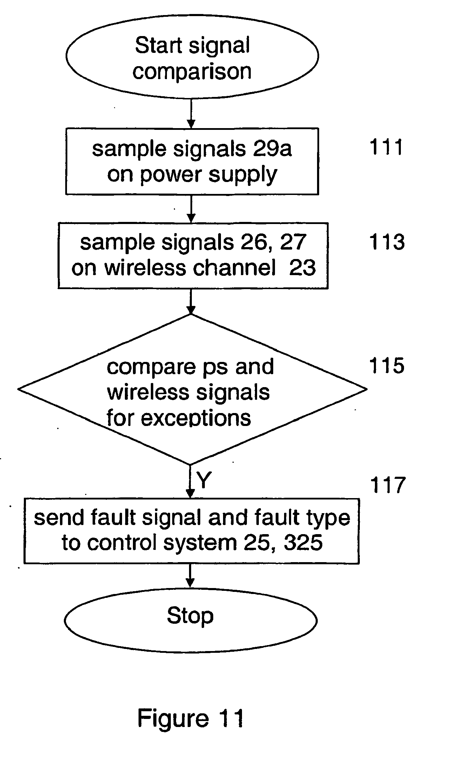

In another embodiment, one or more functions in the control system 25, 325 listens all the time and provides consistency checking for all wireless communications. Figure 11 shows a flowchart for a simple such method. For example at secondary or receiving side power supply 12 the signals are continuously monitored 91 by a function or watchdog function arranged with ES Logic unit 16. The signals compared 95 with the signals over the wireless communication channel 23 received at wireless receiver 20 and checked for consistency by the automation or robot control system 25, 325. If an exception or difference between signals is detected, such as a checksum, or timestamp or other variable or characteristic, a warning signal is sent 97 to the control system 25, 325. The warning may contain both a warning or fault signal and a fault type.

A best use of the power supply for a robot application is in the application of welding in an automobile plant, and preferably connected to an industrial control system such as ABBs Industrial IT. A contactless power supply with emergency stop enabled without duplicated cabling on the tool side is very advantageous. It means that the actuators in a welding or a welding/gripping/manipulating operation may be more efficiently and more economically provided with a safe and interruptable power supply without loading the robot arm with unnecessary cabling and control components. Fast and automated tool changes are also facilitated by this invention.

In another embodiment, the power supply to robot application 1 is not provided by a contactless or inductive method and device but is instead provided to the receiving power supply unit 12 by a conductor, such as a cable or busbar, or a commutator, slip rings etc. according to known practice. This may be used, for example, when the power requirement is too great to be met by inductive means, or when an inductive method would result in inappropriately high electric or magnetic field strengths in a given area. The method may be substantially the same, i.e. signal overlay in the power supply, an ES logic unit at the secondary side that decodes overlaid signals and provides a stop signal interrupting power supply to actuators 4 only.

One or more microprocessors (or processors or computers) comprise a central processing unit CPU performing the steps of the methods according to one or more aspects of the invention. This is performed with the aid of one or more computer programs, which are stored at least in part in memory accessible by the one or more processors. The or each processor may be located in, or arranged connected to, power supply 12 on the tool side, and/or, at least in part, in the robot control system 25, 325. It is to be understood that the computer programs for carrying out methods according to the invention may also be run on one or more general purpose industrial microprocessors or computers instead of one or more specially adapted computers or processors.

The computer program comprises computer program code elements or software code portions that make the computer or processor perform the methods using equations, algorithms, data, stored values, calculations and statistical or pattern recognition methods previously described, for example in relation to Figures 5,6,7,8 and 1. A part of the program may be stored in a processor as above, but also in a ROM, RAM, PROM, EPROM or EEPROM chip or similar memory means. The program in part or in whole may also be stored locally (or centrally) on, or in, other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media such as Sony memory stick (TM) and other removable flash memories, hard drives etc. may also be used. The program may also in part be supplied from a data network, including a public network such as the Internet, via a temporary hard-wire data connection and/or via the wireless communication unit 21 arranged on the tool side. Parts of the above computer programs executing in a component on the tool side may be updated and/or data or control instructions may be also provided by a temporary hard wire network connection and/or by the wireless receiver or transceiver 21. This is especially beneficial for wireless updating of the programs in the tool side components so that updating, configuring can be carried out without requiring an operator to physically enter the robot production cell or automation application area.

The computer programs described may also be arranged in part as a distributed application capable of running on several different computers or computer systems at more or less the same time.

Methods of the invention may also be practised, for example during a configuration phase, or following a stoppage, by means of a Graphical User Interface (GUI), a graphical or textual display on an operator workstation, running on a user's logged-in computer, connected direct to the robot control system or connected via a main or local control server or other control system computer.

It should be noted that while the above describes exemplifying embodiments of the invention, there are several variations and modifications which may be made to the disclosed solution without departing from the scope of the present invention as defined in the appended claims.

## Claims

1. An industrial robot including a power supply for supplying electrical power to a robot application (1, 301), said robot application comprising wireless communication members (20, 21) for control of said robot application, **characterised in that** the power supply (10, 12) includes a power supply member (12) comprising a logic member (16) arranged to provide two or more power supplies (31, 32) of which at least one power supply (32) is separately controllable.

2. An industrial robot according to claim 1, **characterised in that** the power supply (10, 12) comprises a primary unit (10) and a secondary unit (12).

3. An industrial robot according to claim 2, **characterised by** a member (15) in the primary unit (10) for encoding a signal (29a) for transmission over the power supply (29).

4. An industrial robot according to claim 3, **characterised in that** the encoding carried out by primary side member (15) is high frequency modulation (29a).

5. An industrial robot according to claim 3, **characterised in that** the secondary power supply unit (12) comprises a logic member (16) with which a signal (29a) transmitted over the power supply may be decoded.

6. An industrial robot according to claim 2, **characterised in that** the secondary unit (12) comprises an input member in the logic member (16) to receive a confirmation stop signal received by a wireless communication unit (21, 321)

7. An industrial robot according to any of claims 1-6, **characterised in that** the power supply comprises a contactless power transmission member (11, 311) for transmission of electrical power to the robot application (1).

8. An industrial robot according claim 7, **characterised in that** the contactless power transmission member (11, 311) comprises an electrical induction device.

9. An industrial robot according claim 7, **characterised in that** the contactless power transmission member (11, 311) comprises a device for magnetic induction.

10. An industrial robot according to any of claims 1-6, **characterised in that** the electrical power to the electrical power supply (10, 12) may comprise power supplied, at least in part, by a process from any of the list of DC/DC, DC/AC, AC/DC or AC/AC.

11. An industrial robot according to any of claims 1-6, **characterised in that** a conduction member is arranged between the primary power supply (10) and the secondary power supply (12) and comprises any from the list of: wire, cable, busbar, a commutator, slip-rings, brushes.

12. A method to provide electrical power to a robot application (1) comprising wireless communication members (20, 21) for control of said robot application, **characterised by**
- providing an electrical power supply (29) to said robot application and receiving in a logic member (15) of a primary power supply (10) a stop signal,
- generating (56) in the primary power supply (10) a stop signal (29a),
- transmitting the stop signal to a secondary power supply member (12) on the tool side,
- interrupting at least one electrical power supply (32) of the secondary power supply member (12).

13. A method to provide electrical power according to claim 12, **characterised by** embodying the stop signal in an electrical power supply (29) transmitted from the primary power supply (10).

14. A method according to claim 13, **characterised by** embodying the stop signal as a signal overlay (29a) of an AC current in the power supply (29).

15. A method according to claim 13, **characterised by** embodying the stop signal as a modulation of current or voltage in the power supply.

16. A method to provide electrical power according to any of claims 14-15, **characterised by** encoding the stop signal as a predetermined blank period in an overlay or modulation.

17. A method according to claim 12, **characterised by** analysing (65) the varying electrical current (29) for the blank period to detect the stop signal.

18. A method according to claim 17, **characterised by** analysing (65) the varying electrical current (29) for the blank period by means of an analogue/digital conversion process.

19. A method according to claim 12, **characterised by** analysing the varying electrical power supply (29) for a communication pattern to detect the stop signal.

20. A method according to claim 19, **characterised by** analysing the communication pattern by means of any from the list of: a statistical method, a Baysian statistical method, a neural network analytical method.

21. A method according to claim 12, **characterised by** sending a confirmation stop signal to the secondary power supply (12) via the wireless communication channel (23).

22. A method according to claim 21, **characterised by** receiving (83) a confirmation stop signal in a member (16) of the secondary power supply (12) via the wireless communication channel (23) and releasing (85) the stop signal to interrupt power supply 32.

23. A method according to claim 12, **characterised by** generating (56) in the control system a confirmation (69) start or re-start signal for transmission to the receiving power supply member (12).

24. A method according to claim 23, **characterised by** transmitting the confirmation (69) of the start or re-start signal by means of a wireless communication channel (23).

25. A method according to claim 12, **characterised by**
- receiving a start or re-start signal,
- receiving the confirmation of the start or re-start signal,
- releasing the start or re-start signal.

26. A method according to claim 12, **characterised by** monitoring the outputs from secondary power supply (12) and the secondary side wireless receiver (21, 321) by means of a function of the secondary power supply (12), or the ES Logic unit (16,) comparing the two signals and checking it for consistency of wireless communication.

27. A method according to claim 24, **characterised by** sending (97), a fault signal to the control system (25, 325) which may also comprise information about the type of fault, in the event that an exception or a difference in communications is detected.

28. A method according to any of claims 21-27, **characterised by** transmitting the wireless communication (23) using a broad spectrum wireless protocol in the ISM band with significant interference suppression means by spread spectrum technology.

29. A computer program product comprising computer code means and/or software code portions for making a computer or processor perform a method according to claim 12 stored on a computer readable medium.

30. Use of an industrial robot according to claim 1 for operating a robot or automation application (1) in an industrial or commercial installation to carry out an operation comprising any from the list of: painting, welding, soldering, riveting, gluing, folding plate, bending plate, hemming plate, fettling, cutting, laser cutting, gripping an object, manipulating an object, stacking, pick and place.

31. Use of an industrial robot according to claim 1 for operating a robot or automation application (1) in an installation for power generation, transmission and/or distribution, to carry out an operation from any of the list of: switching, circuit breaking, isolating, operating a transformer, operating a tap-changer, operating a protection device.

## Patentansprüche

1. Ein Industrieroboter, welcher eine Stromversorgung zur Versorgung einer Roboteranwendung (1, 301) mit elektrischem Strom enthält, wobei die Roboteranwendung drahtlose Kommunikationselemente (20, 21) zur Kontrolle der Roboteranwendung umfasst, **dadurch gekennzeichnet, dass** die Stromversorgung (10, 12) ein Stromversorgungselement (12) enthält, welches ein Logikelement (16) umfasst, welches angeordnet ist, um zwei oder mehr Stromversorgungen (31, 32) bereitzustellen, von welchen mindestens eine Stromversorgung (32) separat kontrollierbar ist.

2. Ein Industrieroboter gemäß Anspruch 1, **dadurch gekennzeichnet, dass** die Stromversorgung (10, 12) ein Primäreinheit (10) und eine Sekundäreinheit (12) umfasst.

3. Ein Industrieroboter gemäß Anspruch 2, **gekennzeichnet durch** ein Element (15) in der Primäreinheit (10) zum Kodieren eines Signals (29a) zur Übertragung über die Stromversorgung (29).

4. Ein Industrieroboter gemäß Anspruch 3, **dadurch gekennzeichnet, dass** das Kodieren, welches durch ein Primärseitenelement (15) ausgeführt wird, Hochfrequenzmodulation (29a) ist.

5. Ein Industrieroboter gemäß Anspruch 3, **dadurch gekennzeichnet, dass** die Sekundärstromversorgungseinheit (12) ein Logikelement (16) umfasst, mit welchem ein Signal (29a), welches über die Stromversorgung übertragen wird, dekodiert werden kann.

6. Ein Industrieroboter gemäß Anspruch 2, **dadurch gekennzeichnet, dass** die Sekundäreinheit (12) ein Eingabeelement in dem Logikelement (16) umfasst, um ein Bestätigungsstoppsignal zu empfangen, welches durch eine drahtlose Kommunikationseinheit (21, 321) empfangen wird.

7. Ein Industrieroboter gemäß einem der Ansprüche 1-6, **dadurch gekennzeichnet, dass** die Stromversorgung ein kontaktloses Stromübertragungselement (11, 311) umfasst zur Übertragung von elektrischem Strom an die Roboteranwendung (1).

8. Ein Industrieroboter gemäß Anspruch 7, **dadurch gekennzeichnet, dass** das kontaktlose Stromübertragungselement (11, 311) eine elektrische Induktionsvorrichtung umfasst.

9. Ein Industrieroboter gemäß Anspruch 7, **dadurch gekennzeichnet, dass** das kontaktlose Stromübertragungselement (11, 311) eine Vorrichtung zur magnetischen Induktion umfasst.

10. Ein Industrieroboter gemäß einem der Ansprüche 1-6, **dadurch gekennzeichnet, dass** der elektrische Strom an die elektrische Stromversorgung (10, 12) Strom umfassen kann, welcher, zumindest zum Teil, durch einen Prozess von einem aus der Liste DC/DC, DC/AC, AC/DC oder AC/AC zugeführt wird.

11. Ein Industrieroboter gemäß einem der Ansprüche 1-6, **dadurch gekennzeichnet, dass** ein Leitelement angeordnet ist zwischen der Primärstromversorgung (10) und der Sekundärstromversorgung (12) und irgendeines umfasst aus der Liste aus: Draht, Kabel, Stromschiene, einem Umschalter, Schleifringe, Bürsten.

12. Ein Verfahren zur Bereitstellung von elektrischem Strom für eine Roboteranwendung (1), welche drahtlose Kommunikationselemente (20, 21) zur Kontrolle der Roboteranwendung umfasst, **gekennzeichnet durch**
- Bereitstellung einer elektrischen Stromversorgung (29) an die Roboteranwendung und Empfangen eines Stoppsignals in einem Logikelement (15) einer Primärstromversorgung (10),
- Erzeugen (56) eines Stoppsignals (29a) in der Primärstromversorgung (10),
- Übertragen des Stoppsignals an ein Sekundärstromversorgungselement (12) auf der Werkzeugseite,
- Unterbrechen mindestens einer elektrischen Stromversorgung (32) des Sekundärstromversorgungselements (12).

13. Ein Verfahren zur Bereitstellung elektrischen Stroms gemäß Anspruch 12, **gekennzeichnet durch** Darstellen des Stoppsignals in einer elektrischen Stromversorgung (29), welches von der Primärstromversorgung (10) übermittelt wird.

14. Ein Verfahren gemäß Anspruch 13, **gekennzeichnet durch** Darstellen des Stoppsignals als Signalüberlagerung (29a) eines Wechselstroms in der Stromversorgung (29).

15. Ein Verfahren gemäß Anspruch 13, **gekennzeichnet durch** Darstellen des Stoppsignals als eine Modulation von Strom oder Spannung in der Stromversorgung.

16. Ein Verfahren zur Bereitstellung elektrischen Stroms gemäß einem der Ansprüche 14-15, **gekennzeichnet durch** Kodieren des Stoppsignals als vorbestimmte Freiperiode in einer Überlagerung oder Modulation.

17. Ein Verfahren gemäß Anspruch 12, **gekennzeichnet durch** Analysieren (65) des variierenden elektrischen Stroms (29) für die Freiperiode, um das Stoppsignal zu detektieren.

18. Ein Verfahren gemäß Anspruch 17, **gekennzeichnet durch** Analysieren (65) des variierenden elektrischen Stroms (29) für die Freiperiode mittels eines Analog/Digital-Umwandlungsprozesses.

19. Ein Verfahren gemäß Anspruch 12, **gekennzeichnet durch** Analysieren der variierenden elektrischen Stromversorgung (29) für ein Kommunikationsmuster, um das Stoppsignal zu detektieren.

20. Ein Verfahren gemäß Anspruch 19, **gekennzeichnet durch** Analysieren des Kommunikationsmusters mittels irgendeines aus der Liste aus: einem Statistikverfahren, einem Bayesschen Statistikverfahren, einem Neuronennetzanalyseverfahren.

21. Ein Verfahren gemäß Anspruch 12, **gekennzeichnet durch** Senden eines Bestätigungsstoppsignals an die Sekundärstromversorgung (12) über den drahtlosen Kommunikationskanal (23).

22. Ein Verfahren gemäß Anspruch 21, **gekennzeichnet durch** Empfangen (83) eines Bestätigungsstoppsignals in einem Element (16) der Sekundärstromversorgung (12) über den drahtlosen Kommunikationskanal (23) und Freisetzen (85) des Stoppsignals, um die Stromversorgung (32) zu unterbrechen.

23. Ein Verfahren gemäß Anspruch 12, **gekennzeichnet durch** Erzeugen (56) in dem Kontrollsystem eines Bestätigungs- (69) -startsignals oder -neustartsignals zur Übermittlung an das empfangende Stromversorgungselement (12).

24. Ein Verfahren gemäß Anspruch 23, **gekennzeichnet durch** Übermitteln der Bestätigung (69) des Start- oder Neustartsignals mittels eines drahtlosen Kommunikationskanals (23).

25. Ein Verfahren gemäß Anspruch 12, **gekennzeichnet durch**
- Empfangen eines Start- oder Neustartsignals,
- Empfangen der Bestätigung des Start- oder Neustartsignals,
- Freisetzen des Start- oder Neustartsignals.

26. Ein Verfahren gemäß Anspruch 12, **gekennzeichnet durch** Überwachen der Ausgaben von der Sekundärstromversorgung (12) und des Sekundärseitendrahtlosempfängers (21, 321) mittels einer Funktion der Sekundärstromversorgung (12) oder der ES Logikeinheit (16), welche die zwei Signale vergleicht und auf Fortbestehen drahtloser Kommunikation prüft.

27. Ein Verfahren gemäß Anspruch 24, **gekennzeichnet durch** Senden (97) eines Störungssignals an das Kontrollsystem (25, 325), welches auch Information über die Art der Störung umfassen kann, im Fall, dass eine Ausnahme oder ein Unterschied in Kommunikationen wahrgenommen wird.

28. Ein Verfahren gemäß einem der Ansprüche 21-27, **gekennzeichnet durch** Übermitteln der drahtlosen Kommunikation (23) **durch** Verwenden eines Breitspektrumdrahtlosprotokolls im ISM-Band mit Unterdrückungsmitteln für signifikante Interferenz **durch** Spread-Spectrum-Technologie.

29. Ein Computerprogrammprodukt, welches Computercodemittel und/oder Softwarecodeanteile umfasst, um einen Computer oder einen Prozessor dazu zu bringen, ein Verfahren gemäß Anspruch 12 auszuführen, welches auf einem computerlesbaren Medium gespeichert ist.

30. Verwendung eines Industrieroboters gemäß Anspruch 1 zum Betreiben eines Roboters oder einer Automationsanwendung (1) in einer industriellen oder gewerblichen Anlage, um einen Arbeitsgang auszuführen, welcher irgendeines umfasst aus der Liste aus: Lackieren, Schweißen, Löten, Nieten, Kleben, Faltplatte, Biegeplatte, Falzplatte, Putzen, Schneiden, Laserschneiden, Greifen eines Objekts, Manipulieren eines Objekts, Stapeln, Bestücken.

31. Verwenden eines Industrieroboters gemäß Anspruch 1 zum Betreiben eines Roboters oder einer Automationsanwendung (1) in einer Anlage zur Stromerzeugung, -übermittlung und/oder -verteilung, um einen irgendeinen Betrieb durchzuführen aus der Liste aus: Schalten, Schaltkreisunterbrechung, Isolieren, Betrieb eines Transformators, Betrieb eines Stufenschalters, Betrieb eines Schutzgeräts.

## Revendications

1. Robot industriel incluant une alimentation en énergie pour alimenter en énergie électrique une application robotique (1, 301), ladite application robotique comprenant des éléments de communication sans fil (20, 21) pour commander ladite application robotique, **caractérisé en ce que** l'alimentation en énergie (10, 12) inclut un élément d'alimentation en énergie (12) comprenant un élément logique (16) agencé pour fournir deux ou plusieurs alimentations en énergie (31, 32) dont au moins une alimentation en énergie (32) peut être commandée séparément.

2. Robot industriel selon la revendication 1, **caractérisé en ce que** l'alimentation en énergie (10, 12) comprend une unité primaire (10) et une unité secondaire (12).

3. Robot industriel selon la revendication 2, **caractérisé par** un élément (15) dans l'unité primaire (10) pour coder un signal (29a) destiné à être transmis sur l'alimentation en énergie (29).

4. Robot industriel selon la revendication 3, **caractérisé en ce que** le codage réalisé par l'élément de côté primaire (15) est une modulation haute fréquence (29a).

5. Robot industriel selon la revendication 3, **caractérisé en ce que** l'unité secondaire (12) d'alimentation en énergie comprend un élément logique (16) avec lequel un signal (29a) transmis sur l'alimentation en énergie peut être décodé.

6. Robot industriel selon la revendication 2, **caractérisé en ce que** l'unité secondaire (12) comprend un élément d'entrée dans l'élément logique (16) pour recevoir un signal d'arrêt de confirmation reçu par une unité de communication sans fil (21, 321).

7. Robot industriel selon l'une quelconque des revendications 1-6, **caractérisé en ce que** l'alimentation en énergie comprend un élément de transmission d'énergie sans contact (11, 311) pour la transmission d'une énergie électrique à l'application robotique (1).

8. Robot industriel selon la revendication 7, **caractérisé en ce que** l'élément de transmission d'énergie sans contact (11, 311) comprend un dispositif d'induction électrique.

9. Robot industriel selon la revendication 7, **caractérisé en ce que** l'élément de transmission d'énergie sans contact (11, 311) comprend un dispositif d'induction magnétique.

10. Robot industriel selon l'une quelconque des revendications 1-6, **caractérisé en ce que** l'énergie électrique vers l'alimentation en énergie électrique (10, 12) peut comprendre de l'énergie fournie, au moins en partie, par un processus parmi l'un quelconque de CC/CC, CC/CA, CA/CC ou CA/CA.

11. Robot industriel selon l'une quelconque des revendications 1-6, **caractérisé en ce qu'**un élément de conduction est agencé entre l'alimentation en énergie primaire (10) et l'alimentation en énergie secondaire (12) et comprend n'importe lequel dans la liste suivante : fil, câble, barre de bus, commutateur, bagues collectrices, balais.

12. Procédé pour fournir de l'énergie électrique à une application robotique (1) comprenant des éléments de communication sans fil (20, 21) pour commander ladite application robotique, **caractérisé par**
- fournir une alimentation en énergie électrique (29) à ladite application robotique et recevoir dans un élément logique (15) d'une alimentation en énergie primaire (10) un signal d'arrêt,
- générer (56) dans l'alimentation en énergie primaire (10) un signal d'arrêt (29a),
- transmettre le signal d'arrêt à un élément d'alimentation en énergie secondaire (12) du côté outil,
- interrompre au moins une alimentation en énergie électrique (32) de l'élément d'alimentation en énergie secondaire (12).

13. Procédé pour fournir de l'énergie électrique selon la revendication 12, **caractérisé par** la mise en oeuvre du signal d'arrêt dans une alimentation en énergie électrique (29) transmise depuis l'alimentation en énergie primaire (10).

14. Procédé selon la revendication 13, **caractérisé par** la mise en oeuvre du signal d'arrêt comme un recouvrement de signal (29a) d'un courant CA dans l'alimentation en énergie (29).

15. Procédé selon la revendication 13, **caractérisé par** la mise en oeuvre du signal d'arrêt comme une modulation d'une intensité ou d'une tension dans l'alimentation en énergie.

16. Procédé pour fournir de l'énergie électrique selon l'une quelconque des revendications 14-15, **caractérisé par** le codage du signal d'arrêt comme une période de blanc prédéterminée dans un recouvrement ou une modulation.

17. Procédé selon la revendication 12, **caractérisé par** l'analyse (65) de la variation de l'intensité électrique (29) pendant la période de blanc pour détecter le signal d'arrêt.

18. Procédé selon la revendication 17, **caractérisé par** l'analyse (65) de la variation de l'intensité électrique (29) pendant la période de blanc au moyen d'un processus de conversion analogique/numérique.

19. Procédé selon la revendication 12, **caractérisé par** l'analyse de la variation de l'alimentation en énergie électrique (29) pour un motif de communication pour détecter le signal d'arrêt.

20. Procédé selon la revendication 19, **caractérisé par** l'analyse du motif de communication au moyen de l'une quelconque parmi : une méthode statistique, une méthode statistique Bayésienne, une méthode analytique par réseau neural.

21. Procédé selon la revendication 12, **caractérisé par** l'envoi d'un signal d'arrêt de confirmation à l'alimentation en énergie secondaire (12) via le canal de communication sans fil (23).

22. Procédé selon la revendication 21, **caractérisé par** la réception (83) d'un signal d'arrêt de confirmation dans un élément (16) l'alimentation en énergie secondaire (12) via le canal de communication sans fil (23) et la libération (85) du signal d'arrêt pour interrompre l'alimentation en énergie (32).

23. Procédé selon la revendication 12, **caractérisé par** la génération (56) dans le système de commande d'un signal de démarrage ou de redémarrage de confirmation (69) pour transmission à l'élément d'alimentation en énergie secondaire (12).

24. Procédé selon la revendication 23, **caractérisé** la transmission de la confirmation (69) du signal de démarrage ou de redémarrage au moyen d'un canal de communication sans fil (23).

25. Procédé selon la revendication 12, **caractérisé par**
- la réception d'un signal de démarrage ou de redémarrage,
- la réception de la confirmation du signal de démarrage ou de redémarrage,
- la libération du signal de démarrage ou de redémarrage.

26. Procédé selon la revendication 12, **caractérisé par**
la commande des sorties de l'alimentation en énergie secondaire (12) et du récepteur sans fil de côté secondaire (21, 321) au moyen d'une fonction de l'alimentation en énergie secondaire (12), ou de l'unité logique ES (16,) comparant les deux signaux et vérifiant la cohérence de la communication sans fil.

27. Procédé selon la revendication 24, **caractérisé par** l'envoi (97), d'un signal d'erreur au système de commande (25, 235) qui peut aussi comprendre une information sur le type d'erreur, dans le cas où une exception ou d'une différence dans les communications est détectée.

28. Procédé selon l'une quelconque des revendications 21-27, **caractérisé par** la transmission de la communication sans fil (23) en utilisant un protocole sans fil à spectre large dans la bande ISM avec des moyens de suppression d'interférences significatives par une technologie à spectre large.

29. Produit de programme informatique comprenant des moyens de code informatique et/ou des parties de code de logiciel pour faire qu'un ordinateur ou un processeur réalise un procédé selon la revendication 12 stocké sur un support lisible informatiquement.

30. Utilisation d'un robot industriel selon la revendication 1 pour faire fonctionner un robot ou un dispositif automatique (1) dans une installation industrielle ou commerciale pour réaliser une opération comprenant l'un parmi : la soudure, la peinture, la brasure, le rivetage, le collage, le cintrage de tôle, le pliage de tôle, le rabattage de tôle, l'ébarbage, la coupe, la coupe laser, l'accrochage d'un objet, la manipulation d'un objet, l'empilement, la prise et le placement.

31. Utilisation d'un robot industriel selon la revendication 1 pour actionner un robot ou un dispositif automatique (1) dans une installation pour la génération, la transmission et/ou la distribution d'énergie, pour réaliser une opération parmi l'une quelconque par : la commutation, la rupture de circuit, l'isolation, l'actionnement d'un transformateur, l'actionnement d'un changeur de prises, l'actionnement d'un dispositif de protection.
